# EUROPÄISCHE PATENTANMELDUNG

(11) **EP 2 998 924 A1**
(43) Veröffentlichungstag der Anmeldung: **23.03.2016**
(21) Anmeldenummer: 15186089.7
(22) Anmeldetag: 21.09.2015
(51) Int. Cl.: G06Q 50/28, G06Q 10/08

(54) **VERFAHREN ZUR ABWICKLUNG EINES BELADE- BZW. ENTLADEVORGANGES EINES LASTKRAFTWAGENS SOWIE VERWENDUNG EINES SMARTPHONE**

(30) Priorität: 19.09.2014 DE 102014013618
(71) Anmelder: Wöhrl, Thomas, 74629 Pfedelbach (DE)
(72) Erfinder: Wöhrl, Thomas, 74629 Pfedelbach (DE)
(74) Vertreter: Wieske, Thilo

(57) **Zusammenfassung**

Die vorliegende Erfindung betrifft ein Verfahren zur Abwicklung eines Belade- bzw. Entladevorganges eines Lastkraftwagens in einer Umgebung mit mehreren verschiedenen Belade- bzw. Entladepositionen, wobei ein Rechnersystem vorhanden ist, in das über ein lokales, nicht drahtgebundenes Netzwerk mehrere Endgeräte eingebunden sind bzw. einbindbar sind, wobei die Abwicklung eines Belade- bzw. Entladevorganges initiiert wird, indem der Belade- bzw. Entladevorgang einem bestimmten Endgerät zugewiesen wird und dass dem Belade- bzw. Entladevorgang eine bestimmte Belade- bzw. Entladeposition zugewiesen wird, wobei die Position der Endgeräte in der Umgebung bestimmbar ist, wobei die Durchführung der Beladung bzw. der Entladung abhängig davon freigegeben wird, dass die erkannte Position des Endgerätes, dem der Belade- bzw. Entladevorgang zugewiesen ist, mit der Belade- bzw. Entladeposition korreliert, die dem Belade- bzw. Entladevorgang zugewiesen wurde und wobei die Durchführung der Beladung bzw. Entladung abhängig davon freigegeben wird, dass über das bestimmte Endgerät manuell und/oder durch eine Spracheingabe durch den Benutzer ein Anforderungssignal eingegeben wird, das für die Auslösung der Durchführung der Beladung bzw. Entladung an das Rechnersystem übermittelt wird. Ebenso betrifft die Erfindung die Verwendung eines Smartphone als Endgerät.

## Beschreibung

Die vorliegende Erfindung betrifft ein Verfahren zur Abwicklung eines Belade- bzw. Entladevorganges eines Lastkraftwagens nach dem Oberbegriff des Anspruchs 1 oder 2 sowie eine Verwendung eines Smartphone nach Anspruch 8.

Lastkraftwagen, die mit Schüttgut beladen werden, fahren regelmäßig Aufbereitungsanlagen an. Dort können diese Lastkraftwagen mit verschiedenen Materialien beladen werden, die in den Aufbereitungsanlagen gelagert bzw. aufbereitet werden. Dabei soll durchweg mit den Lastkraftwagen bei einer Fuhre nur ein bestimmtes Material in einer bestimmten Menge transportiert werden. Es besteht daher das Problem, dass in der Aufbereitungsanlage das richtige Material in der richtigen Menge zugeladen wird. Das bestimmte Material kann dabei auch aus einem definierten Materialmix bestehen. Beispielsweise beim Straßenbau werden als Untergrund Steine mit verschiedenen Korngrößen verwendet. In diesem Fall geht es darum, dass der Lastkraftwagen in der Aufbereitungsanlage den richtigen Materialmix zulädt.

Gleichzeitig soll in der Aufbereitungsanlage erfasst werden, welcher Lastkraftwagen welche Mengen welchen Materials zugeladen hat, wenn er die Aufbereitungsanlage verlässt. Diese Erfassung dient sowohl der Abrechnung der Materialien in kaufmännischer Hinsicht sowie auch der Verkehrssicherheit, weil damit erkannt werden kann, ob ein Lastkraftwagen eventuell überladen ist. Dazu kann beispielsweise im Einfahrt- und Ausfahrtbereich der Aufbereitungsanlage eine Fahrzeugwaage angeordnet sein. Damit kann das Gewicht des Fahrzeugs bei der Einfahrt gemessen werden. Ebenso kann das Gewicht des Fahrzeugs bei der Ausfahrt gemessen werden. Durch die Differenz zwischen dem Gewicht bei der Ausfahrt und dem Gewicht bei der Einfahrt kann ermittelt und festgehalten werden, wie viel Material auf den Lastkraftwagen aufgeladen wurde.

Die Menge des zugeladenen Materials an der Beladestelle kann ebenfalls durch ein Verwiegen erfolgen oder durch eine Einstellung einer Durchflussrate des Materials in Verbindung mit einer einstellbaren Dauer einer Öffnung der Materialzufuhr. Die Einstellung der Durchflussrate kann beispielsweise durch die Einstellung eines definierten Öffnungsquerschnitts erreicht werden.

Bisher ist es in diesem Zusammenhang bekannt, eine Zuordnung eines Lastkraftwagens an den bestimmten Positionen auf dem Gelände vorzunehmen, indem beispielsweise das Kennzeichen des Lastkraftwagens mittels optischer Sensoren erkannt und ausgewertet wird. Für die Abrechnung ist es üblich, dass der Fahrzeugführer eine Unterschrift auf einem Lieferschein leistet. Diese Unterschrift kann auch elektronisch auf einem Schriftpad erfasst werden.

Außer den angesprochenen Aufbereitungsanlagen kann die vorliegende Erfindung allgemein eingesetzt werden für Schüttgut und Zuschlagsstoffe. Bei den zu ladenden und zu transportierenden Materialen bzw. Materialgemischen kann es sich auch um fließfähige Stoffe wie beispielsweise Beton- oder Asphaltmischungen handeln. Beispielsweise kann es sich auch um loses Saat- bzw. Erntegut handeln, Granulat verschiedener Materialien oder ähnliches. Im Zusammenhang mit der vorliegenden Anmeldung wird daher allgemein von einer Umgebung gesprochen, in der sich mehrere verschiedene Belade- bzw. Entladestationen befinden. Wenn im Folgenden von "Aufbereitungsanlagen" gesprochen wird, bezieht sich dies daher nur beispielhaft auf Aufbereitungsanlagen im eigentlichen Sinne. Das Verständnis dieses Begriffs im Zusammenhang der vorliegenden Anmeldung ist hingegen weiter zu verstehen in dem Sinne, dass auch andere lose bzw. fließfähige Materialien geladen und transportiert werden sollen. Insbesondere eingeschlossen sind beispielsweise Schotter- oder Kieswerke sowie Zement- und/oder Asphaltwerke.

Insbesondere geht es bei der vorliegenden Erfindung um Schüttgut, das aus einem Material bzw. einem bestimmten Materialmix besteht, und das in entsprechenden Werken aufbereitet und gelagert wird zur Abholung durch Kunden bzw. durch zur Abholung beauftragte Transportunternehmen. Bei den Schüttgütern handelt es sich insbesondere um Baustoffe.

Der vorliegenden Erfindung liegt die Aufgabe zu Grunde, den Belade- bzw. Entladevorgang eines Lastkraftwagens in der Abwicklung zu vereinfachen.

Diese Aufgabe wird nach der vorliegenden Erfindung gemäß Anspruch 1 gelöst durch ein Verfahren zur Abwicklung eines Belade- bzw. Entladevorganges eines Lastkraftwagens in einer Umgebung mit mehreren verschiedenen Belade- bzw. Entladepositionen. Es handelt sich um Belade- bzw. Entladevorgänge mit zu verwiegenden Schüttgütern. Nach der vorliegenden Erfindung ist ein Rechnersystem vorhanden, in das über ein lokales, nicht drahtgebundenes Netzwerk mehrere Endgeräte eingebunden sind bzw. einbindbar sind. Die Abwicklung eines Belade- bzw. Entladevorganges wird initiiert, indem der Belade- bzw. Entladevorgang einem bestimmten Endgerät zugewiesen wird. Weiterhin wird dem Belade- bzw. Entladevorgang eine bestimmte Belade- bzw. Entladeposition zugewiesen. Die Position der Endgeräte in der Umgebung ist bestimmbar. Die Durchführung der Beladung bzw. der Entladung wird abhängig davon freigegeben, dass die erkannte Position des Endgerätes, dem der Belade- bzw. Entladevorgang zugewiesen ist, mit der Belade- bzw. Entladeposition korreliert, die dem Belade- bzw. Entladevorgang zugewiesen wurde. Außerdem wird die Durchführung der Beladung bzw. Entladung abhängig davon freigegeben, dass über das bestimmte Endgerät manuell und/oder durch eine Spracheingabe durch den Benutzer ein Anforderungssignal eingegeben wird, das für die Auslösung der Durchführung der Beladung bzw. Entladung an das Rechnersystem übermittelt wird.

Der Gegenstand dieser Patentanmeldung betrifft sowohl Belade- wie auch Entladevorgänge von Lastkraftwagen. Die Umgebung mit mehreren verschiedenen Belade- bzw. Entladepositionen betrifft dabei ein Gelände, das beispielsweise zu einer Aufbereitungsanlage gehört und das verschiedene Belade- bzw. Entladestationen aufweist für die verschiedenen Materialien. Diese verschiedenen Belade- bzw. Entladestationen sind auf dem Gelände verteilt.

Vom Betreiber der Aufbereitungsanlage wird ein Rechnersystem bereitgehalten, das aus einem zentralen Leitrechner bestehen kann. Es kann sich aber auch dabei bereits um ein Netzwerk handeln, das aus mehreren Einzelrechnern besteht.

Dieses Rechnersystem ist Bestandteil eines lokalen Netzwerkes, in das mehrere Endgeräte eingebunden sind bzw. einbindbar sind. Diese Einbindung der Endgeräte in das Netzwerk erfolgt drahtlos.

Die Endgeräte können vom Betreiber der Aufbereitungsanlage leihweise zur Verfügung gestellt werden für die Abwicklung eines Belade- bzw. Entladevorganges. Bei der Einfahrt in die Aufbereitungsanlage (in das Gelände) wird dem Fahrzeugführer leihweise ein Endgerät zur Abwicklung des Belade- bzw. Entladevorganges zur Verfügung gestellt. Bei der Ausfahrt gibt der Fahrzeugführer das Endgerät wieder zurück. Diese Vorgehensweise hat den Vorteil, dass das lokale Netzwerk gesperrt werden kann für alle Endgeräte, die nicht vom Betreiber des lokalen Netzwerks selbst unmittelbar freigegeben sind. Mit dieser Betriebsweise kann eine hohe Datensicherheit im lokalen Netzwerk gewährleistet werden, weil keine Fremdgeräte in das Netzwerk eingebunden werden müssen.

Es ist auch möglich, das lokale Netzwerk offen zu halten für die Einbindung eigener Endgeräte von Benutzern. Hierbei kann es sich beispielsweise um tablet-PCs oder Smartphones handeln. Diese Betriebsweise hat den Vorteil, dass diese Geräte mit einer entsprechenden gerätespezifischen Software (App) ausgestattet sein können. Dies ist insofern vorteilhaft, weil diese Geräte weit verbreitet sind und der logistische Aufwand mit der Ausleihe und Rückgabe der Endgeräte vermieden wird. Diese Ausführungsform ist auch vorteilhaft, wenn mittels eines Endgerätes eine Abholung von Schüttgütern in einem automatisierten Betrieb der Aufbereitungsanlage realisiert werden soll.

Die Einbindung der Endgeräte in das lokale Netzwerk der Aufbereitungsanlage kann durch eine grundlegende Initialisierung des jeweiligen Endgerätes erfolgen. Bei dieser grundlegenden Initialisierung wird das jeweilige Endgerät (insbesondere auch unter Verwendung der SIM-Karte des jeweiligen Endgerätes) registriert. Dazu kann dem Endgerät eine Kennung zugewiesen werden. Die Kennung kann beispielsweise bei Verwendung eines Smartphone als Endgerät mit einem QR-Code Scanner eingelesen werden, nachdem eine Kennung vorher in einen QR-Code umgewandelt wurde.

Alternativ oder zusätzlich kann diese Registrierung bei der Initialisierung damit kombiniert werden, dass die Kennung mit einem Kennzeichen eines Fahrzeugs kombiniert wird bzw. aus einem derartigen Kennzeichen besteht. Die Fahrer fahren regelmäßig dieselben LKW, so dass darüber eine zusätzliche Plausibilitätsprüfung möglich wird. Wenn der Fahrzeugführer sein Endgerät beibehält, aber mit einem anderen LKW ankommt, muss das Endgerät für diesen LKW entsprechend neu registriert werden.

Mit der Registrierung des Endgerätes ist es möglich, Konfigurationsdaten der Aufbereitungsanlage auf das Endgerät zu übertragen. Durch diese Konfigurationsdaten der Aufbereitungsanlage lassen sich ggf. erweitere Funktionsumfänge bei dem Verfahren realisieren.

Dies kann beispielsweise in einer Zielführung zu der zugewiesenen Beladestation im Sinne eines Navigationssystems sein. In diesem Fall gehören Topographiedaten der Aufbereitungsanlage zu den Konfigurationsdaten.

Damit wird auch ein Funktionsumfang realisierbar, bei dem bei einem entsprechend weitgehenden automatisierten Betrieb der Aufbereitungsanlage der Fahrer des LKW über das registrierte Endgerät das Werktor zur Aufbereitungsanlage öffnen kann. Wenn im Weiteren der Beladevorgang einschließlich der Ausgangswiegung und einer Quittierung des erhaltenen Produkts und der erhaltenen Menge automatisiert ablaufen kann, wird es möglich, dass ein Fahrer auch außerhalb vorgegebener Öffnungszeiten Stoffe von einer Aufbereitungsanlage abholen kann.

Die Abwicklung eines Belade- bzw. Entladevorganges wird initiiert, indem der Belade- bzw. Entladevorgang einem bestimmten Endgerät zugewiesen wird.

Dies kann erfolgen, indem bei Eingang einer Bestellung beim Betreiber der Aufbereitungsanlage ein Leihgerät initialisiert wird mit einem Datensatz zu der Bestellung. Von dem Rechnersystem wird weiterhin eine Kennung des Endgerätes (Leihgerätes) gespeichert, das dann diesem Belade- bzw. Entladevorgang zugeordnet ist. Wenn das entsprechende Fahrzeug für den Belade- bzw. Entladevorgang an der Aufbereitungsanlage ankommt, wird dem Fahrzeugführer für die weitere Durchführung des Belade- bzw. Entladevorganges das Leihgerät ausgehändigt, um dieses während des Aufenthaltes in der Aufbereitungsanlage mit sich zu führen und den weiteren Vorgang über das Leihgerät, die darauf befindliche Software sowie die für den Belade- bzw. Entladevorgang gespeicherten Daten abwickeln zu können.

Dies kann auch erfolgen, indem mit Eingang einer Bestellung dem Betreiber der Aufbereitungsanlage eine Kennung eines Endgerätes mitgeteilt wird, das dem Belade- bzw. Entladevorgang zugeordnet werden soll. Von dem Rechnersystem wird diese Kennung gespeichert, so dass dann dieses Endgerät dem Belade- bzw. Entladevorgang zugeordnet ist.

Der Eingang einer Bestellung kann erfolgen, indem ein Disponent die Bestellung abgibt und danach erst der Lastkraftwagen zur Abholung des Materials zur Aufbereitungsanlage fährt. Die Bestellung kann auch unmittelbar vom Fahrzeugführer des Lastkraftwagens beispielsweise an der Einfahrt der Aufbereitungsanlage abgegeben werden. Bei Verwendung eines eigenen Endgerätes kann vom Fahrzeugführer die Bestellung auch über eine Software des Endgerätes veranlasst werden.

Bei der Ausgestaltung nach Anspruch 1 wird dem Belade- bzw. Entladevorgang weiterhin eine bestimmte Belade- bzw. Entladeposition zugewiesen.

Dabei handelt es sich um eine der Belade- bzw. Entladepositionen auf dem Gelände der Aufbereitungsanlage. Die Information über diese Belade- bzw. Entladeposition kann mit Bestandteil des Datensatzes sein, der auf das Endgerät übertragen wird. In dem Endgerät kann weiterhin eine Kartenfunktion integriert sein. Für den Benutzer ist dann eine Wegführung realisierbar, indem das Endgerät als Navigationshilfe verwendet werden kann.

Nach dem vorliegenden Verfahren ist die Position der Endgeräte in der Umgebung, d.h. auf dem Gelände der Aufbereitungsanlage, bestimmbar.

Dies hat den unmittelbaren Vorteil, dass die Durchführung der Beladung bzw. Entladung abhängig davon freigegeben wird, ob sich das Endgerät in einer bestimmten Position bzw. in einem bestimmten Bereich auf dem Gelände der Aufbereitungsanlage befindet. Die Durchführung der Beladung bzw. der Entladung wird abhängig davon freigegeben, dass die erkannte Position des Endgerätes, dem der Belade- bzw. Entladevorgang zugewiesen ist, mit der Belade- bzw. Entladeposition korreliert, die dem Belade- bzw. Entladevorgang zugewiesen wurde.

Das Endgerät befindet sich beim Fahrzeugführer in der Fahrerkabine des Lastkraftwagens. Das bedeutet, dass aus der Position des Endgerätes unmittelbar auf die Position des Lastkraftwagens geschlossen werden kann. Damit kann eine Sicherheitsprüfung in dem Sinne durchgeführt werden, dass eine Beladung bzw. Entladung nur dann durchgeführt wird, wenn das Endgerät (und damit auch der Lastkraftwagen) sich an der entsprechenden Belade- bzw. Entladeposition befindet.

Wenn die Belade- bzw. Entladepositionen auf dem Gelände der Aufbereitungsanlage so dicht beieinander liegen, dass eine genaue Zuordnung der Position des Endgerätes zu einer der Belade- bzw. Entladepositionen nicht möglich ist, kann eine zusätzliche Redundanz realisiert werden, indem der Fahrzeugführer über das Endgerät nochmals eine Kennung eingibt, die die Belade- bzw. Entladepositionen charakterisiert. Es kann dann überprüft werden, ob diese Belade- bzw. Entladeposition mit der für den Belade- bzw. Entladevorgang zugewiesenen Belade- bzw. Entladeposition übereinstimmt.

Begrifflich ist im Zusammenhang mit der vorliegenden Anmeldung zu unterscheiden zwischen einem Belade- bzw. Entladevorgang sowie der Durchführung der Beladung bzw. Entladung. Der Belade- bzw. Entladevorgang betrifft die Abwicklung der Logistik sowie die unmittelbare Beladung bzw. Entladung des LKW. Die Durchführung der Beladung bzw. Entladung betrifft die unmittelbare Beladung bzw. Entladung des LKW.

Außerdem wird die Durchführung der Beladung bzw. Entladung abhängig davon freigegeben, dass über das bestimmte Endgerät ein Anforderungssignal für die Durchführung der Beladung bzw. Entladung an das Rechnersystem übermittelt wird. Dieses Anforderungssignal wird manuell und/oder durch eine Spracheingabe durch den Benutzer eingegeben und anschließend an das Rechnersystem übermittelt zur Auslösung der Durchführung der Beladung bzw. Entladung.

Dies erweist sich insofern als vorteilhaft, als damit für den Fahrzeugführer eindeutig erkennbar ist, wann die Durchführung der Beladung bzw. Entladung gestartet wird. Das Anforderungssignal wird vorteilhaft übermittelt, wenn der Benutzer (Fahrzeugführer des betreffenden Lastkraftwagens) an dem Endgerät eine entsprechende Bestätigung eingegeben hat, dass die Beladung bzw. Entladung durchgeführt werden soll.

Gegebenenfalls kann dieses Aufforderungssignal noch korreliert werden mit einem weiteren Bestätigungssignal, für das ein manuell zu betätigendes Betätigungselement betätigt werden muss, das ortsfest in der Aufbereitungsanlage in der Nähe zu der Belade-/Entladestation angebracht ist und das in dem System eine korrelierte Zuordnung zu der Belade-/Entladestation aufweist. Vorteilhaft wird dabei eine Freigabe nur dann vorgenommen, wenn die Eingabe über das Endgerät sowie die Betätigung des manuellen Betätigungselementes innerhalb eines vorgegebenen Zeitfensters erfolgt.

In vorteilhafter Ausgestaltung kann dem Fahrzeugführer auf dem Endgerät angezeigt werden, wie weit der Beladungsvorgang bereits fortgeschritten ist. Dies kann auf einer Anzeigeeinheit des Endgerätes erfolgen oder auch durch Informationen mittels einer Sprachausgabe. Der Fortschritt des Beladungsvorgangs kann beispielsweise mittels einer Webcam-Funktion realisiert werden oder mit einer Waage am Ort der Beladungsstation oder mit einer Bewertung der bereits beladenen Menge des Stoffes. Damit wird es dem Fahrzeugführer auch möglich, sein Fahrzeug während des Beladevorgangs so zu bewegen (insbesondere durch Vorwärts- und Rückwärtsfahren), dass die Ladung möglichst gleichmäßig verteilt wird. Mit der Waage kann die Menge des geladenen Stoffes durch einen Wiegevorgang erfasst werden. Die Bewertung der bereits geladenen Menge des Stoffes kann erfolgen, indem - wie eingangs beschrieben - aus einem Öffnungsquerschnitt die Durchflussmenge des Stoffes abgeleitet wird. Die Bewertung erfolgt, indem weiterhin erfasst wird, wie lange der Stoff bereits geladen wird. Aus dem Produkt der Durchflussmenge und der Zeit lässt sich die Menge des bereits geladenen Stoffes ermitteln.

Insoweit ist beschrieben, wie insbesondere eine Beladungsvorgang in technischer Hinsicht abgewickelt wird. Dabei kommt es wesentlich darauf an, dass der richtige Stoff in der richtigen Menge zugeladen wird. Dies wird kontrolliert, indem der Übergabepunkt (Beladestation) festgelegt wird und weiterhin kontrolliert wird, dass die Durchführung der Beladung dann erfolgt, wenn sich das richtige Fahrzeug an der Beladestation befindet. Durch die Einbindung des Endgerätes wird erreicht, dass die Durchführung des Beladungsvorgangs nur durch eine Eingabe des Benutzers über dieses Endgerät ausgelöst werden kann.

Wie beschrieben, kann die Kommunikation über das Endgerät akustisch, insbesondere durch sprachliche Kommunikation abgewickelt werden. Es ist alternativ oder zusätzlich möglich, die Kommunikation über eine Anzeigeeinheit sowie ein oder mehrere manuelle Bedienelemente an dem Endgerät abzuwickeln.

Dabei erweist es sich über die drahtlose Einbindung des Endgerätes in das lokale Netzwerk als vorteilhaft, dass die Kommunikation mit dem Fahrzeugführer zumindest nahezu vollständig bei geschlossener Kabine des Fahrerhauses erfolgen kann. Dies erweist sich bei den schwierigen Umgebungsbedingungen in einer Aufbereitungsanlage hinsichtlich Schmutz, Staub und Lärm sowie oftmals auch der Temperatur als besonders vorteilhaft. Gerade bei einer Kommunikation mittels Sprache ist es vorteilhaft, dass die Kabine geschlossen bleiben kann, weil die Umgebungsgeräusche die Kommunikation weniger stören.

In einer besonders vorteilhaften Weiterbildung ist auch vorgesehen, dass der Benutzer über das Endgerät Bestätigungen und Quittierungen eingeben kann, die für nachfolgende Abrechnungsvorgänge verbindlichen Charakter haben. Diese Eingabe der Bestätigungen und Quittierungen über das Endgerät kann beispielsweise über manuell zu betätigende Betätigungselemente erfolgen. In diesem Fall muss dem Benutzer entsprechend eindeutig angezeigt und/oder durch Sprachkommunikation mitgeteilt werden, dass er mit einer Betätigung des Betätigungselementes eine verbindliche Quittierung bzw. Bestätigung abgibt. Es ist alternativ oder zusätzlich möglich, auf dem Endgerät ein Eingabefeld vorzusehen, auf dem der Benutzer eine Unterschrift leistet, die gescannt werden kann und anschließend als Bilddatei in das lokale Netzwerkt zu dem Leitrechner übertragen wird. Mit einer solchen Ausgestaltung wird für den Benutzer besonders vorteilhaft erkennbar, dass er eine Quittierung bzw. Bestätigung abgibt, die einen verbindlichen Charakter hat.

Es erweist sich allgemein als vorteilhaft, wenn für den Benutzer erkennbar ist, wann er im Rahmen der Kommunikation eine erste Art von Erklärungen und Informationen abgibt, die der technischen Abwicklung der Durchführung der Beladung bzw. Entladung dienen und wann er im Rahmen der Kommunikation einer zweite Art von Erklärungen und Informationen abgibt, die den Charakter von Quittierungen und Bestätigungen haben, die für nachfolgende Abrechnungsvorgänge verbindlichen Charakter haben.

Vorteilhaft werden die Erklärungen und Informationen der ersten Art auf technisch unterschiedliche Weise eingegeben wie die Erklärungen und Informationen der zweiten Art.

Beispielsweise kann dies realisiert werden, indem die Erklärungen und Informationen der ersten Art mittels Sprachkommunikation abgegeben und empfangen werden, die ggf. durch eine optische Anzeige unterstützt wird. Demgegenüber können bei diesem Beispiel die Erklärungen der zweiten Art über manuelle Betätigungselemente und/oder ein Eingabefeld für eine Unterschrift eingegeben werden.

Es erweist sich dabei als vorteilhaft, dass auch die Erklärungen der zweiten Art bei geschlossener Kabine des Fahrzeugs abgegeben werden können.

Insgesamt wird damit eine deutliche Verbesserung bei der Dokumentation der Abrechnung erreicht.

Bei einer weiteren erfindungsgemäßen Ausgestaltung des Verfahrens gemäß Anspruch 2 wird dem Belade- bzw. Entladevorgang nicht eine bestimmte Belade- bzw. Entladeposition zugewiesen sondern eine Auswahl möglicher Belade- bzw. Entladepositionen. Insbesondere bei einer Aufbereitungsanlage mit großem Durchsatz von Material und eventuell auch größeren zurückzulegenden Wegstrecken zu den Belade- bzw. Entladepositionen kann es vorteilhaft sein, mehrere Belade- bzw. Entladepositionen für ein bestimmtes Material parallel zu betreiben. Der Fahrzeugführer kann diese Belade- bzw. Entladepositionen anfahren und sein Fahrzeug dort positionieren, wo eine Belade- bzw. Entladeposition frei ist.

Im Folgenden wird die Durchführung der Beladung bzw. der Entladung abhängig davon freigegeben, dass die erkannte Position des Endgerätes, dem der Belade- bzw. Entladevorgang zugewiesen ist, mit einer Belade- bzw. Entladeposition korreliert, die in der Auswahl möglicher Belade- bzw. Entladepositionen enthalten ist, wobei im Falle der Freigabe der Beladung bzw. der Entladung dem Belade- bzw. Entladevorgang die Belade- bzw. Entladeposition zugewiesen wird, die mit der erkannten Position des Endgerätes korreliert.

Dabei wird die Zuweisung der Belade- bzw. Entladeposition erst dann vorgenommen, wenn der Fahrzeugführer sein Fahrzeug positioniert und manuell und/oder durch eine Spracheingabe ein Anforderungssignal eingegeben hat, das für die Auslösung der Durchführung der Beladung an das Rechnersystem übermittelt wird.

Wenn die Belade- bzw. Entladepositionen auf dem Gelände der Aufbereitungsanlage so dicht beieinander liegen, dass eine genaue Zuordnung der Position des Endgerätes zu einer der Belade- bzw. Entladepositionen nicht möglich ist, kann eine zusätzliche Redundanz realisiert werden, indem der Fahrzeugführer über das Endgerät nochmals eine Kennung eingibt (manuell und/oder durch eine Spracheingabe), die die Belade- bzw. Entladepositionen charakterisiert. Es kann dann überprüft werden, ob diese Belade- bzw. Entladeposition in der Auswahl der möglichen Belade- bzw. Entladepositionen enthalten ist. Ist dies der Fall, wird dem Belade- bzw. Entladevorgang diese Belade- bzw. Entladeposition zugewiesen.

Durch die größere Flexibilität bei der Zuweisung der Belade- bzw. Entladepositionen durch die Auswahl mehrerer möglicher Belade- bzw. Entladepositionen kann vermieden werden, dass durch eine frühzeitige Festlegung der Belade- bzw. Entladeposition der Fahrzeugführer eventuell warten muss, weil ein Vorgänger die Belade- bzw. Entladeposition noch blockiert, während eventuell eine benachbarte Belade- bzw. Entladeposition für dasselbe Material bereits frei wäre, aber nicht benutzt werden kann, weil dies nicht mit der Zuweisung der Belade- bzw. Entladeposition für den Belade- bzw. Entladevorgang zusammenpassen würde.

Im Übrigen gelten die Erläuterungen im Zusammenhang mit der Ausführungsform gemäß Anspruch 1 auch hinsichtlich der Ausführungsform gemäß Anspruch 2. Dies gilt auch für die beschriebenen vorteilhaften Weiterbildungen.

Bei der Ausgestaltung nach Anspruch 3 erfolgt die Einbindung der Endgeräte in das lokale Netzwerk über bluetooth und/oder über WLAN und/oder über das Internet.

Die Ausgestaltung nach Anspruch 3 hat den Vorteil, dass es bei Verwendung von bluetooth oder WLAN nicht zwingend erforderlich ist, dass die Endgeräte auf dem Gelände der Aufbereitungsanlage über das Mobilfunknetz erreichbar sind. Dies erweist sich insofern als vorteilhaft, als die Feldstärke von Mobilfunknetzen in Aufbereitungsanlagen nicht unbedingt ausreichend ist, um eine sichere Datenübertragung vom Rechnersystem zu den Endgeräten zu gewährleisten. Insofern erweist es sich als vorteilhaft, wenn über bluetooth und/oder über WLAN alternativ oder zusätzlich ein Netzwerk bereitgestellt wird, über das der Datentransfer abgewickelt werden kann.

Dabei können die auf dem Gelände der Aufbereitungsanlage befindlichen Endgeräte selbst wiederum Relais-Stationen des Netzwerks sein. Das bedeutet, dass es nicht zwingend erforderlich ist, dass der Datentransfer von den Endgeräten direkt zu dem Rechnersystem erfolgt. Es ist auch möglich, den Datentransfer über ein Datenprotokoll zu realisieren, so dass die Daten von einem Endgerät zu einem anderen Endgerät übertragen werden, das sich in diesem Moment räumlich dichter zu einem WLAN-Router des Rechnersystems befindet als das Endgerät, von dem die Daten ausgesendet wurden.

Entsprechendes gilt für ein Netzwerk mit einer Datenübertragung über bluetooth.

Es ist dabei auch möglich, die verschiedenen Möglichkeiten der Datenübertragung zu kombinieren und die entsprechenden Netzwerke parallel zu betreiben. Wenn eine der Datenverbindungen zusammenbricht, kann ggf. über die andere Datenverbindung weiter ein Datenaustausch erfolgen.

Bei der Ausgestaltung nach Anspruch 4 wird die Position der Endgeräte auf dem Gelände über bluetooth, WLAN oder über ein GPS-Signal bestimmt.

Die Bestimmung über ein GPS-Signal kann derart erfolgen, dass das Endgerät einen GPS-Empfänger enthält, mit dem das Endgerät selbst seine Position bestimmen kann und die Daten dieser Position dann über das Netzwerk versendet. Ebenso kann über die gerätespezifische Software auf dem Endgerät die Position aus dem GPS-Signal von dem Rechnersystem abgefragt werden.

Ebenso ist es möglich, über das WLAN oder bluetooth eine Positionsbestimmung des Endgerätes vorzunehmen.

Mit dieser Positionsbestimmung wird es beispielsweise möglich, dem Fahrzeugführer eine Zielführung zu geben, indem das Endgerät als Navigationshilfe verwendet wird von der Einfahrt in die Aufbereitungsanlage zur Belade- bzw. Entladeposition und wieder aus der Aufbereitungsanlage hinaus. Auf dem Endgerät kann beispielsweise ein Wegenetz der Aufbereitungsanlage dargestellt werden, in Verbindung mit einer Anzeige der Position des Fahrzeugs in diesem Wegenetz.

Bei der Ausgestaltung nach Anspruch 5 weist das Rechnersystem einen zentraler Leitrechner auf.

Dies erweist sich insofern als vorteilhaft, weil dabei lediglich ein Rechner an einem Ort vorgehalten werden muss. Bei einer Aufbereitungsanlage bestehen häufig schwierige Umgebungsbedingungen für den Betrieb elektronischer Geräte hinsichtlich Schmutz, Temperaturen, Feuchtigkeit und ggf. auch chemische Stoffe.

Insofern ist es vorteilhaft, wenn ein zentraler Leitrechner vorhanden ist, so dass Aufstellbedingungen hinsichtlich Sauberkeit und Temperatur konzentriert nur für diesen Ort gewährleistet werden müssen.

Bei der Ausgestaltung nach Anspruch 6 sind auf dem Gelände mehrere Relaisstationen für das lokale Netzwerk vorhanden.

Dies erweist sich insofern als vorteilhaft, weil diese Relaisstationen technisch weniger aufwendig sind und auch leichter redundant ausgeführt werden können durch eine entsprechende Dichte an Relaisstationen. Bei Ausfall einzelner Relaisstationen bleibt das Netzwerk dennoch funktionsfähig. Es ist dann leichter, die entsprechenden Relaisstationen auszutauschen bzw. zu reparieren, weil das Netzwerk insgesamt weiterbetrieben werden kann.

Die Relaisstationen können drahtgebunden mit dem zentralen Rechnersystem verbunden sein oder ebenfalls kabellos.

Anspruch 7 betrifft eine Ausgestaltung des Verfahrens, wonach während des Belade- bzw. Entladevorgangs eine Eingangswiegung erfolgt vor der Durchführung des Belade- bzw. Entladevorgangs sowie eine Ausgangswiegung nach der Durchführung des Belade- bzw. Entladevorgangs. Von dem Benutzer kann über das Endgerät durch eine manuelle Eingabe die Ergebnisse der Messungen der Eingangswiegung und der Ausgangswiegung bestätigt werden sowie die Art des Stoffes, der bei dem Belade- bzw. Entladevorgang geladen bzw. abgeladen wurde.

Hierbei handelt es sich entsprechend der Darstellung im Zusammenhang mit Anspruch 1 um Informationen der zweiten Art, die für nachfolgende Abrechnungsvorgänge benötigt werden. Die manuelle Eingabe kann über ein zu betätigendes Betätigungselement erfolgen. Mit der Betätigung wird ein angezeigter Wert bestätigt. Ebenso kann die manuelle Eingabe erfolgen über ein Eingabefeld, auf dem eine Unterschrift geleistet wird, die gescannt werden kann.

Damit wird vorteilhaft über das Endgerät eine vollständige Dokumentation des Belade- bzw. Entladevorganges erreicht. Dies ist vorteilhaft bei einem automatisierten Betrieb einer Aufbereitungsanlage, schafft aber auch im Übrigen eine Verbesserung bei der Dokumentation des Belade- bzw. Entladevorgangs zur Abrechnung.

Dabei erweist es sich insbesondere als vorteilhaft, dass die entsprechenden Bestätigungen durch den Fahrzeugführer über sein Endgerät komfortabel in seiner Sitzposition am Fahrersitz eingegeben werden können.

Die Eingabe und auch die Ausgabe von Informationen kann sprachlich erfolgen über ein Mikrophon bzw. einen Lautsprecher, die in das Endgerät integriert sein können. Eine Eingabe des Fahrzeugführers kann auch in anderer Weise erfolgen durch Betätigen eines Betätigungselementes an dem Endgerät oder durch Eingabe einer Unterschrift auf einem Bereich, der scannbar ist, um eine entsprechende Dokumentation der Bestätigung zu erreichen durch eine Übertragung zu dem Leitrechner der Aufbereitungsanlage über das lokale Netzwerk. Dabei kann vorteilhaft auch die Fahrerkabine geschlossen bleiben. Dies ist besonders bei Umgebungsbedingungen sinnvoll, bei denen durch andere Fahrzeuge Staub aufgewirbelt wird oder durch andere Belade- bzw. Entladevorgänge durch das dabei bewegte Schüttgut. Außer dem Aufwirbeln von Staub erweist sich dies auch als vorteilhaft im Hinblick auf Umgebungsgeräusche, die weniger störend sind, wenn der Fahrzeugführer das Führerhaus seines Fahrzeugs geschlossen halten kann.

In diesem Zusammenhang wird nochmals auf die Ausführungen im Zusammenhang mit Anspruch 1 verwiesen im Hinblick auf die Vorteile der unterschiedlichen technischen Ausgestaltung der Eingabe durch den Fahrzeugführer bei Erklärungen und Informationen der ersten Art und zu Erklärungen und Informationen der zweiten Art.

Anspruch 8 betrifft die Verwendung eines Smartphone mit einer gerätespezifischen Software für die Abwicklung der endgeräteseitigen Maßnahmen des Verfahrens als Endgerät zur Durchführung des Verfahrens.

Dies erweist sich insofern als vorteilhaft, weil ein gängiges Smartphone bereits in erheblichem Umfang die erforderliche Hardware aufweist, um als Endgerät bei einer Ausgestaltung eines der vorgenannten Verfahren verwendet werden zu können.

Dies gilt sowohl für die Einbindung in ein bluetooth-Netz, ein WLAN oder eine Datenübertragung über das Internet. Ebenso ist ein GPS-Empfänger vorhanden. Die weiteren benötigten Funktionen lassen sich einfach mittels einer gerätespezifischen Software (App) implementieren.

Bei der Ausgestaltung nach Anspruch 9 werden über das Smartphone Daten über den Belade- bzw. Entladevorgang über eine Datenübertragung des Smartphone über das Internet und/oder per SMS übermittelt.

Dies erweist sich insofern als vorteilhaft, weil die Daten nach Beendigung des Belade- bzw. Entladevorganges sofort aktualisiert an den Disponenten des LKW-Betreibers übertragen werden können. Dadurch wird wiederum die Logistik vereinfacht.

Bei der vorliegenden Erfindung erweist es sich insgesamt als vorteilhaft, dass der Fahrzeugführer des Lastkraftwagens während seines Aufenthaltes auf dem Gelände der Aufbereitungsanlage das Fahrzeug nicht verlassen muss. Der notwendige Austausch der Daten kann zumindest nahezu vollständig über das Endgerät erfolgen, das sich in dem Führerhaus des Lastkraftwagens befindet. Dies erweist sich insofern als vorteilhaft, als beim Aufenthalt des Lastkraftwagens in der Aufbereitungsanlage keine Seitenscheibe sowie keine Tür des Fahrerhauses geöffnet werden muss. Dadurch kann vorteilhaft vermieden werden, dass Schmutz in das Führerhaus des Lastkraftwagens gelangen kann.

Durch die Abwicklung der notwendigen Kommunikation und den Datenaustausch über das Endgerät ergibt sich weiterhin ein erheblicher Vorteil in der Handhabung. Bei der bisherigen Ausgestaltung ergibt sich beim Leisten einer Unterschrift für den Fahrzeugführer das Problem, dass der Fahrzeugführer auf der linken Seite im Führerhaus sitzt, in den meisten Fällen aber Rechtshänder ist. Entsprechend weit muss sich dann der Fahrzeugführer aus dem Seitenfenster lehnen, wenn er bei der Unterschrift in seinem Fahrzeug sitzen bleiben will. Zudem ist es notwendig, zum Unterschreiben das Seitenfenster oder die Tür zu öffnen.

Eine Bestätigung im Sinne einer Quittierung kann durch eine Eingabe und eine Bestätigung über das Endgerät erfolgen, so dass eine vorher erfolgte Registrierung diese Bestätigung als verbindliche Erklärung des Fahrzeugführers gelten lässt. Ebenso kann der Fahrzeugführer auch eine normale Unterschrift auf einer Fläche des Endgerätes leisten, von der diese Unterschrift gescannt werden kann. Damit wird nochmals sicherer dokumentiert, dass diese Quittierung tatsächlich von dem Fahrzeugführer stammt.

Die Kommunikation über das Endgerät bietet den weiteren Vorteil, dass in den genannten schwierigen Umgebungsbedingungen der Aufbereitungsanlage keine weiteren elektronischen Geräte betrieben werden müssen, die diesen Umgebungsbedingungen ausgesetzt sind wie beispielsweise Pads für Unterschriften oder optische Sensoren zur Erkennung von Nummernschildern. Die optischen Sensoren können verschmutzen, ebenso die Nummernschilder.

Auch wenn es grundsätzlich möglich ist, die Kommunikation vollständig über die Endgeräte abzuwickeln, kann es dennoch sinnvoll sein, weitere Betätigungselemente stationär in der Aufbereitungsanlage zu betreiben. Beispielsweise kann es sinnvoll sein, aus Sicherheitsgründen nochmals ein separates Betätigungselement vorzusehen, das physikalisch vor Ort betätigt werden muss, um die Durchführung einer Beladung bzw. Entladung zu starten. Ebenso betrifft dies beispielsweise "Notaus"-Betätigungselemente, die vor Ort vorhanden sein können.

Es ist damit beispielsweise eine Ausgestaltung möglich, bei der solche Betätigungselemente optional lediglich für sicherheitsrelevante Funktionen außerhalb des Fahrzeugs betätigt werden müssen, die anderen Funktionen, die rein logistischen Zwecken dienen, jedoch über das Endgerät aus dem Fahrzeug heraus auch bei geschlossenen Fenstern und Türen betätigbar sind.

Im Weiteren werden ergänzend noch weitere vorteilhafte Ausgestaltungen der Erfindung - insbesondere hinsichtlich des Verfahrens - beschrieben.

Nach der Zuweisung eines Endgerätes zu einem Beladevorgang kann in besonders vorteilhafter Weise eine zusätzliche Redundanz geschaffen werden, indem von dem Rechnersystem an das Endgerät eine Bestätigungsaufforderung gesandt wird, die die Art des bestellten Materials und/oder die Menge des bestellten Materials betrifft. Durch Eingabe einer Bestätigung über das Endgerät kann damit vom Fahrzeugführer nochmals bestätigt werden, dass es sich um das richtige Material handelt und dass der Fahrzeugführer auch die bestellte Menge mitnehmen will und (hinsichtlich der Zuladung seines Fahrzeugs) mitnehmen kann.

Es handelt sich hierbei also um die Kombination der Merkmale:
➢ Senden einer Bestätigungsaufforderung vom Rechnersystem an das Endgerät hinsichtlich der Art und/oder der Menge des bestellten Materials,
➢ Senden einer Bestätigung vom Endgerät an das Rechnersystem, wenn die Bestellung so akzeptiert wird bzw. Rücksendung geänderter Daten, wenn die Bestellung geändert werden soll.

Diese Bestätigung vom Endgerät an das Rechnersystem erfolgt nach Eingabe Information der zweiten Art durch den Fahrzeugführer.

Sofern das Material in besonderer Weise für eine bestimmte Bestellung zubereitet wird, erweist es sich als sinnvoll, die Zubereitung des Materials nicht früher zu beginnen, als dass die Bestätigung über das Endgerät vorliegt.

Damit kann vermieden werden, dass Material zubereitet wurde, das dann nicht abgeholt wird. Dies führt zum einen zu Problemen bei der finanziellen Abrechnung. Außerdem müssen diese gesondert hergestellten bzw. gemischten Materialien für jeden Bestellvorgang separat gelagert werden in einem Silo. Wird das Material dann nicht vollständig abgeholt, muss der Rest des Materials aus dem Silo entfernt werden, um diesen nicht zu blockieren. Nach der Entfernung des Materials aus dem Silo muss dieses entsorgt werden.

Eine derartige Zubereitung eines Materials kann beispielsweise in der Herstellung eines Betons mit definierten Mischungsverhältnissen der Bestandteile sowie ggf. definierten Mengen weiterer Zuschlagsstoffe für bestimmte Anwendungsgebiete bestehen. Gerade bei diesen besonderen Zubereitungen ist es sinnvoll, dass die Menge der bereitgestellten Materialien der Menge entspricht, die bestellt wurde und die dann insbesondere auch abgeholt wird.

Eine weitere besonders vorteilhafte Ausgestaltung besteht darin, dass - insbesondere bei einem Endgerät, das dem Fahrzeugführer gehört - frühzeitig bereits vor dem Erreichen des Geländes eine Kommunikation aufgebaut wird, um die Ankunft des Fahrzeugs und den Zeitpunkt der Beladung bzw. Entladung zu koordinieren.

Beispielsweise kann über das Endgerät des Fahrzeugführers mitgeteilt werden, wann das Fahrzeug das Gelände erreicht. Dies kann der Fahrzeugführer manuell eingeben. Es ist auch möglich, dass diese Information von dem Anwendungsprogramm des Endgerätes über eine Schnittstelle zu einem Navigationsgerät bzw. zu einer Navigationssoftware eingelesen wird. Dies ist insbesondere dann möglich, wenn in dem Navigationsgerät bzw. der Navigationssoftware das entsprechende Gelände als Ziel der Navigation eingegeben ist.

Es ist dann im Weiteren möglich, dass von dem Rechnersystem bestätigt wird, dass das Material zu der mitgeteilten Zeit abgeholt werden kann, wenn dies auf Grund der Disposition der Aufbereitungsanlage möglich ist.

Wenn dies nicht möglich ist, weil beispielsweise zu viele andere Abholer mit ihren Fahrzeugen vorher noch das Gelände blockieren und/oder weil das Material bei einer besonderen Zubereitung zu diesem Zeitpunkt noch nicht fertiggestellt ist, kann von dem Rechnersystem eine Rückmeldung an das Endgerät erfolgen mit der Mitteilung eines Zeitpunktes, wann das Fahrzeug auf Grund der Disposition der Aufbereitungsanlage an dem Gelände sein sollte.

Gegebenenfalls kann auch von dem Rechnersystem eine Kommunikation aufgebaut werden zu dem Endgerät, wenn die Bestellung eingegangen und auf Grund der internen Disposition des Betreibers der Aufbereitungsanlage in einer Abfolge der Abholung der Materialien festgelegt ist, wann das Material gegebenenfalls fertig zubereitet ist und wann auf Grund der Zahl der Abholer auf dem Gelände die Abholung logistisch möglich ist. Hierbei kann wiederum von dem Endgerät eine Bestätigung zu dem Rechnersystem gesandt werden, ob das Fahrzeug zu dem mitgeteilten Zeitpunkt an der Aufbereitungsanlage sein kann.

Die von den Endgeräten an das Rechnersystem mitgeteilten Ankunftszeiten der Fahrzeuge können gegebenenfalls aktualisiert werden, wenn sich diese Ankunftszeiten - beispielsweise auf Grund der Verkehrslage - ändern. Die Disposition in der Aufbereitungsanlage kann ggf. angepasst werden.

Die Mitteilung der Ankunftszeit durch ein Endgerät an die Aufbereitungsanlage kann dabei auch derart erfolgen, dass von dem Endgerät eine entsprechende Mitteilung an das Rechnersystem gesandt wird, wenn sich das Fahrzeug mit dem Endgerät der Aufbereitungsanlage so weit genähert hat, dass die Ankunft innerhalb eines vorgegebenen Zeitfensters erfolgt.

Dieses Zeitfenster kann hinsichtlich der Dauer noch abhängig davon angepasst werden, ob Materialien besonders zubereitet werden müssen (in diesem Fall wäre die Zeitdauer zu berücksichtigen, die die Zubereitung des Materials dauert) oder ob es lediglich um die Abholung von Materialien geht.

In einer weiteren vorteilhaften Ausgestaltung ist es auch möglich, noch eine Rückmeldung von dem Endgerät an das Rechnersystem zu senden, wenn sich die Lieferadresse des abgeholten Materials ändert gegenüber einer vorher (beispielsweise bei Aufgabe der Bestellung) angegebenen Lieferadresse des Materials. Diese Lieferadresse ist von Bedeutung für die Zuordnung der Abrechnung zu einem bestimmten Kunden. Daher erweist es sich als vorteilhaft, wenn eine Änderung dieser Lieferanschrift vor der Auslieferung (d.h. vor dem Abladen des Materials) noch rückwirkend in dem Datensatz geändert wird.

Es ist weiterhin vorteilhaft möglich, dass der Betreiber der Aufbereitungsanlage selbst eigene Fahrzeuge mit einer entsprechenden technischen Ausrüstung in das Gesamtsystem mit einbindet, um beispielsweise Aushaldungsvorgänge vornehmen zu können, wenn ein Speicher zu voll wird und das entsprechende Material entsorgt oder anderweitig zwischengelagert werden muss.

Ein Ausführungsbeispiel der Erfindung ist in der Zeichnung dargestellt. Es zeigt dabei:
- Fig. 1:: einen Ablaufplan für das Verfahren nach der vorliegenden Erfindung,
- Fig. 2:: eine Prinzipdarstellung einer Aufbereitungsanlage,
- Fig. 3:: eine Prinzipdarstellung des lokalen Netzwerkes des Rechnersystems und der Endgeräte und
- Fig. 4:: eine Prinzipdarstellung eines Ablaufs eines Beladevorgangs in einem automatisierten Verfahren.

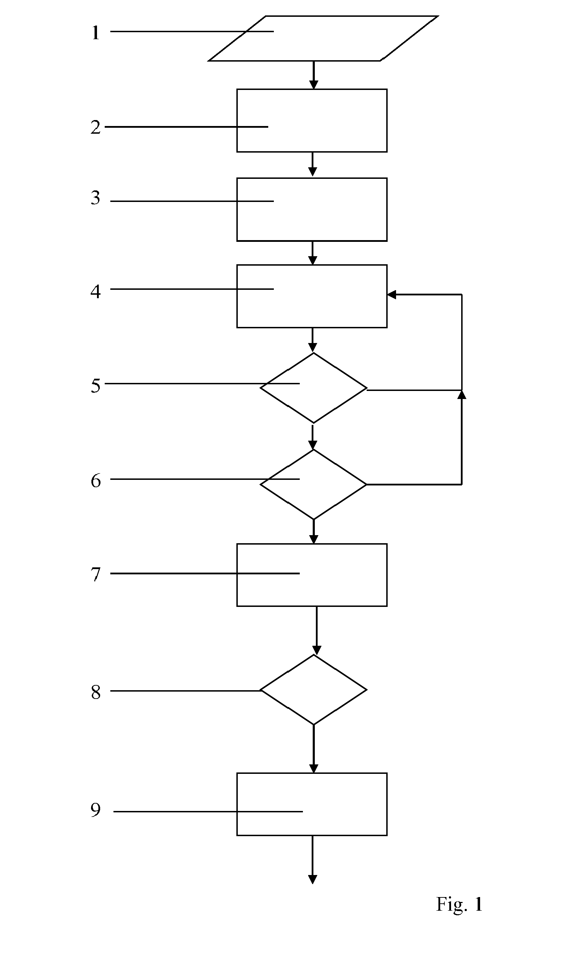

Figur 1 zeigt einen Ablaufplan, bei dem im Schritt 1 ein Beladevorgang initiiert wird. Es wird ein Datensatz angelegt, der Informationen enthält über das bestellte Material, die bestellte Menge, den Besteller / Rechnungsempfänger, das Fahrzeug, das das Material abholt sowie das Endgerät (Smartphone), das diesem Beladevorgang zugeordnet werden soll.

Im Schritt 2 wird eine Kennung des entsprechenden Endgerätes dem Datensatz hinzugefügt.

Im Schritt 3 wird dem Beladevorgang eine Beladeposition zugewiesen. Im dargestellten Ausführungsbeispiel handelt es sich um eine bestimmte Beladeposition. Es kann auch im Sinne des Anspruchs 2 eine Liste mit mehreren in Frage kommenden Beladepositionen angelegt und dem Beladevorgang zugewiesen werden. Ein Identifizierungscode für die Beladeposition wird dem Datensatz ebenfalls hinzugefügt.

Bei der Durchführung des Verfahrens nach Anspruch 1 wird entsprechend dem Schritt 4 die Position des Endgerätes ausgewertet.

Im Schritt 5 wird überprüft, ob die Position des Endgerätes mit der Position der Beladestation korreliert.

Ist dies nicht der Fall, wird die Auswertung der Position des Endgerätes entsprechend dem Schritt 4 fortgesetzt.

Befindet sich das Endgerät im Bereich der Beladeposition, wird das Verfahren mit dem Schritt 6 fortgesetzt, in dem überprüft wird, ob von dem Fahrzeugführer ein Anforderungssignal ausgegeben wurde für den Start des Beladevorganges.

Ist dies nicht der Fall, wird entsprechend dem Schritt 4 weiterhin die Position des Endgerätes im Gelände der Aufbereitungsanlage überprüft.

Andernfalls wird das Verfahren mit dem Schritt 7 fortgesetzt, in dem die Beladung des Fahrzeugs durchgeführt wird.

Im Schritt 8 wird überprüft, ob die Beladung abgeschlossen ist.

Ist dies nicht der Fall, wird die Beladung entsprechend Schritt 7 fortgesetzt.

Ist dies der Fall, erfolgt ein Übergang zu Schritt 9. In diesem Schritt ist zusammenfassend dargestellt, dass der Fahrzeugführer mit einer Navigation aus dem Aufbereitungsanlagegelände herausgeführt wird und dass gegebenenfalls Daten über die Beladung und den Beladungszeitpunkt an den Disponenten übertragen werden können.

Damit ist der Ablauf des Verfahrens beendet.

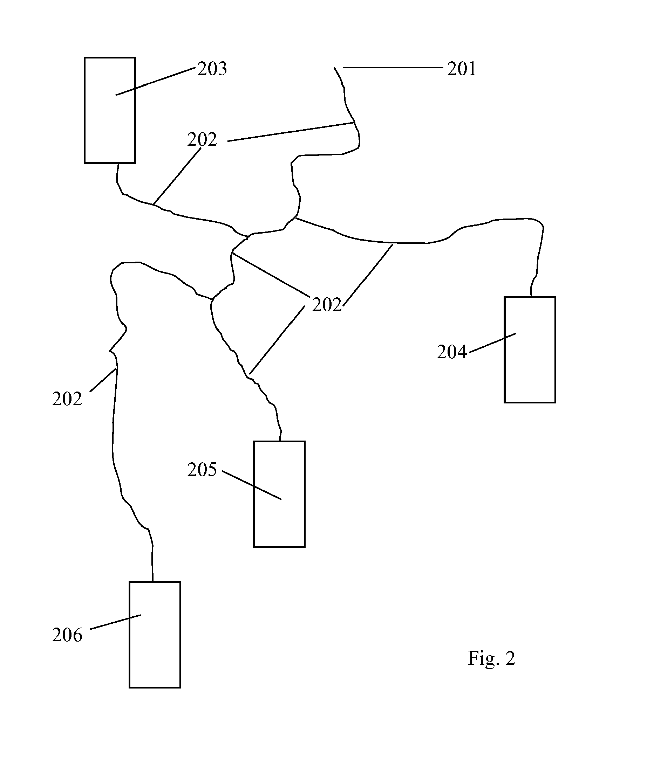

Figur 2 zeigt eine Prinzipdarstellung einer Aufbereitungsanlage. Es ist ein Bereich 201 zu sehen, der als Einfahrt sowie als Ausfahrt dient.

Weiterhin sind Beladestationen 202 zu sehen sowie Wege 203 zu den Beladestationen.

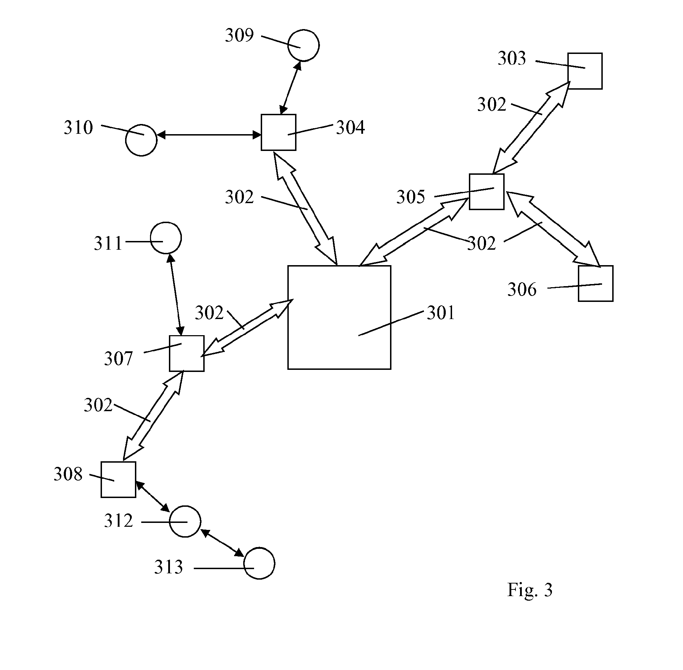

Figur 3 zeigt eine Prinzipdarstellung des lokalen Netzwerkes.

Es ist ein Rechnersystem 301 zu sehen.

Durch die Pfeile 202 mit den Doppelstrichen ist dargestellt, dass dieses Rechnersystem 301 kabelgebunden mit dezentralen Relaisstationen 303, 304, 305, 306, 307, 308 verbunden ist. Dadurch wird die Reichweite des lokalen Netzwerkes verbessert.

Weiterhin sind Endgeräte 309, 310, 311, 312 dargestellt, die drahtlos mit den Relaisstationen kommunizieren können und über diese mit dem Rechnersystem 301 Daten austauschen können. Durch die dezentrale Anordnung der Relaisstationen erweist es sich als vorteilhaft, dass die Reichweite der drahtlosen Kommunikation der Endgeräte 309, 310, 311, 312 nicht bis zum Rechnersystem 301 direkt gehen muss.

Bei den beiden Endgeräten 312, 313 ist ebenfalls zu sehen, dass ein Endgerät (312) selbst als Relaisstation für ein anderen Endgerät (313) verwendet werden kann, wenn das Endgerät 313 derart positioniert wird, dass dieses nicht direkt mit einer Relaisstation Daten austauschen kann, dies aber über das Endgerät 312 als Relaisstation möglich wird.

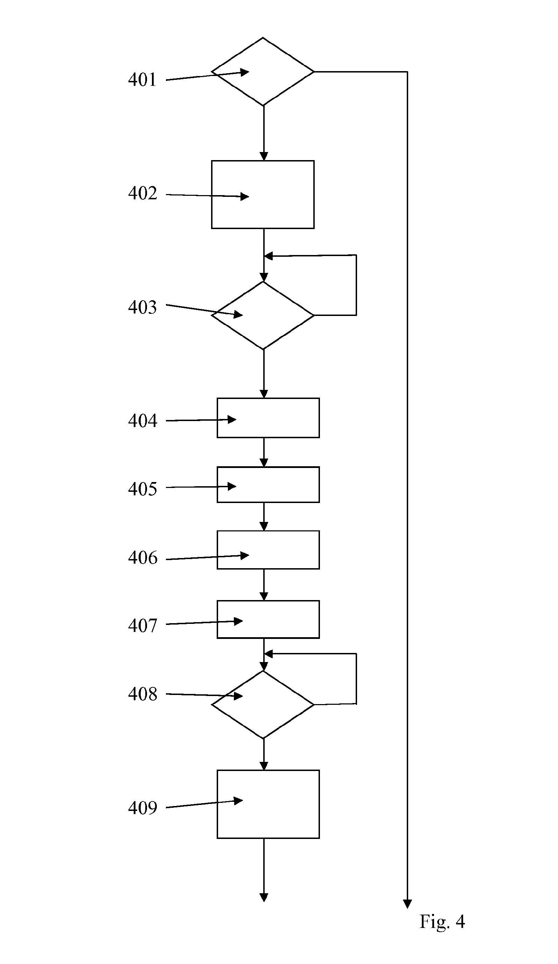

Figur 4 zeigt den Ablauf des Verfahrens eines Beladevorgangs in einem automatisierten Verfahren.

Dazu ist es nicht nur notwendig, dass der Ablauf des Verfahrens in einem technischen Sinne funktioniert sondern auch, dass die entsprechenden Daten über die Beladung protokolliert und quittiert sind, damit der Beladevorgang nachfolgend auch abgerechnet werden kann.

Hierzu wird in dem Schritt 401 geprüft, ob ein vom dem Leitrechner des lokalen Netzwerkes erkanntes Endgerät bereits registriert ist. Ggf. kann es noch unterschiedliche Kategorien von Registrierungen geben, bei denen eine erste Form der Registrierung nicht für einen automatisierten Betrieb der Aufbereitungsanlage zugelassen wird, bei der aber eine zweite Form einer (erweiterten) Registrierung vorgesehen wird, mit der auch ein automatisierter Betrieb der Aufbereitungsanlage zugelassen wird.

Wenn in dem Schritt 401 erkannt wird, dass ein Endgerät mit einer entsprechenden Registrierung am Eingang der Aufbereitungsanlage ankommt, wird das Tor geöffnet.

In dem Schritt 402 erfolgt eine Eingangswiegung des Fahrzeugs.

Nachfolgend wird in dem Schritt 403 durch den Fahrzeugführer über das Endgerät das angezeigte Ergebnis der Eingangswiegung bestätigt. Diese Bestätigung wird von dem Endgerät an den Leitrechner des lokalen Netzwerkes übertragen und dort überprüft.

Entweder ist durch eine Disposition vorab bereits der Beladevorgang angelegt, der dem Endgerät zugeordnet ist oder aber der Fahrzeugführer muss bei der Einfahrt oder vor der Einfahrt in die Aufbereitungsanlage den Beladevorgang anmelden hinsichtlich des Stoffes, der geladen werden soll und der Menge des Stoffes, die geladen werden soll. Der Beladevorgang muss seitens der Aufbereitungsanlage bestätigt und freigegeben werden im Hinblick darauf, dass der Stoff in der gewünschten Menge in einem automatisierten Aufbereitungsanlagenbetrieb bereitgestellt werden kann.

Nur wenn diese Bestätigung nach dem Schritt 403 vorliegt und erkannt wird, wird dem Fahrzeugführer in dem Schritt 404 angezeigt, zu welcher Beladestation er fahren soll (bzw. aus welchen Beladestationen er sich eine freie Beladestation auswählen kann).

Wird über die erkannte Position des Endgerätes erkannt, dass sich der Fahrzeugführer an der bzw. einer richtigen Beladestation befindet, wird dem Fahrzeugführer in dem Schritt 405 angezeigt, dass der Beladevorgang beginnen kann.

Der Fahrzeugführer bestätigt dies entsprechend dem Schritt 406 durch eine Eingabe an seinem Endgerät, die wiederum korreliert werden kann mit einer Betätigung eines manuell zu betätigenden Betätigungselementes, das in der Aufbereitungsanlage ortsfest in räumlicher Nähe zu der Beladestation angebracht ist.

Wenn die Beladung abgeschlossen ist, wird dem Fahrzeugführer in dem Schritt 407 angezeigt, dass er zur Ausgangswiegung fahren muss.

In dem Schritt 408 wird überprüft, ob das Fahrzeug bei der Ausgangswiegung angekommen ist. Ist dies der Fall, wird die Ausgangswiegung vorgenommen und dem Fahrzeugführer angezeigt.

In dem Schritt 409 wird der Fahrzeugführer aufgefordert, das Ergebnis der Ausgangswiegung zu bestätigen. Dies erfolgt wiederum durch eine Eingabe über das Endgerät.

Dabei kann eine Öffnung des Tors der Aufbereitungsanlage zur Ausfahrt des LKW davon abhängig gemacht werden, dass für den Beladevorgang insgesamt alle Bestätigungen des Fahrzeugführers vorliegen.

Es ist offensichtlich, dass das in Figur 4 beschriebene System der Bestätigungen durch den Fahrzeugführer auch vorgenommen werden kann, wenn die Aufbereitungsanlage nicht automatisiert betrieben wird. Dies ist insofern vorteilhaft, weil damit alle Einzelschritte von Messungen, die für die Abrechnung relevant sind, lückenlos dokumentiert sind.

Ebenso ist ersichtlich, dass eine entsprechende Abfolge von Schritten auch erfolgen kann, wenn es sich nicht um einen Beladevorgang handelt sondern um einen Entladevorgang. Auch hierbei kann durch eine Differenzbildung zwischen der Ausgangswiegung zur Eingangswiegung ermittelt werden, wieviel Material - in diesem Fall - angeliefert wurde. Bei einem Beladevorgang wird durch die Differenzbildung ermittelt, wie viel Material geladen wurde.

## Patentansprüche

1. Verfahren zur Abwicklung eines Belade- bzw. Entladevorganges eines Lastkraftwagens in einer Umgebung mit mehreren verschiedenen Belade- bzw. Entladepositionen (203, 204, 205, 206), wobei es sich um Belade- bzw. Entladevorgänge mit zu verwiegenden Schüttgütern handelt,
**dadurch gekennzeichnet**,
➢ dass ein Rechnersystem (301) vorhanden ist, in das über ein lokales, nicht drahtgebundenes Netzwerk mehrere Endgeräte (309, 310, 311, 312, 313) eingebunden sind bzw. einbindbar sind,
➢ dass die Abwicklung eines Belade- bzw. Entladevorganges initiiert wird, indem der Belade- bzw. Entladevorgang einem bestimmten Endgerät (309, 310, 311, 312, 313) zugewiesen wird und dass dem Belade- bzw. Entladevorgang eine bestimmte Belade- bzw. Entladeposition (203, 204, 205, 206) zugewiesen wird (2, 3),
➢ dass die Position der Endgeräte (309, 310, 311, 312, 312, 313) in der Umgebung bestimmbar ist (4),
➢ dass die Durchführung der Beladung bzw. der Entladung abhängig davon freigegeben wird, dass die erkannte Position des Endgerätes (309, 310, 311, 312, 313), dem der Belade- bzw. Entladevorgang zugewiesen ist, mit der Belade- bzw. Entladeposition (203, 204, 205, 206) korreliert, die dem Belade- bzw. Entladevorgang zugewiesen wurde (5) und
➢ dass die Durchführung der Beladung bzw. Entladung abhängig davon freigegeben wird, dass über das bestimmte Endgerät (309, 310, 311, 312, 313) manuell und/oder durch eine Spracheingabe durch den Benutzer ein Anforderungssignal eingegeben wird, das für die Auslösung der Durchführung der Beladung bzw. Entladung an das Rechnersystem (301) übermittelt wird (6).

2. Verfahren zur Abwicklung eines Belade- bzw. Entladevorganges eines Lastkraftwagens in einer Umgebung mit mehreren verschiedenen Belade- bzw. Entladepositionen (203, 204, 205, 206), wobei es sich um Belade- bzw. Entladevorgänge mit zu verwiegenden Schüttgütern handelt,
**dadurch gekennzeichnet**,
➢ dass ein Rechnersystem (301) vorhanden ist, in das über ein lokales, nicht drahtgebundenes Netzwerk mehrere Endgeräte (309, 310, 311, 312, 313) eingebunden sind bzw. einbindbar sind,
➢ dass die Abwicklung eines Belade- bzw. Entladevorganges initiiert wird, indem der Belade- bzw. Entladevorgang einem bestimmten Endgerät (309, 310, 311, 312, 313) zugewiesen wird und dass dem Belade- bzw. Entladevorgang eine Auswahl möglicher Belade- bzw. Entladepositionen zugewiesen wird,
➢ dass die Position der Endgeräte (309, 310, 311, 312, 313) in der Umgebung bestimmbar ist (4),
➢ dass die Durchführung der Beladung bzw. der Entladung abhängig davon freigegeben wird, dass die erkannte Position des Endgerätes (309, 310, 311, 312, 313), dem der Belade- bzw. Entladevorgang zugewiesen ist, mit einer Belade- bzw. Entladeposition korreliert, die in der Auswahl möglicher Belade- bzw. Entladepositionen enthalten ist, wobei im Falle der Freigabe der Beladung bzw. der Entladung der Beladung bzw. Entladung die Belade- bzw. Entladeposition zugewiesen wird, die mit der erkannten Position des Endgerätes (309, 310, 311, 312, 313) korreliert, und
➢ dass die Durchführung der Beladung bzw. Entladung abhängig davon freigegeben wird, dass über das bestimmte Endgerät (309, 310, 311, 312, 313) manuell und/oder durch eine Spracheingabe durch den Benutzer ein Anforderungssignal eingegeben wird, das für die Auslösung der Durchführung der Beladung bzw. Entladung an das Rechnersystem (301) übermittelt wird (6).

3. Verfahren nach Anspruch 1 oder 2,
**dadurch gekennzeichnet, dass** die Einbindung der Endgeräte (309, 310, 311, 312, 313) in das lokale Netzwerk über bluetooth erfolgt und/oder über WLAN und/oder über das Internet.

4. Verfahren nach einem der Ansprüche 1 bis 3,
**dadurch gekennzeichnet, dass** die Position der Endgeräte (309, 310, 311, 312, 313) auf dem Gelände über bluetooth, WLAN oder über ein GPS-Signal bestimmt wird (4).

5. Verfahren nach einem der Ansprüche 1 bis 4,
**dadurch gekennzeichnet, dass** das Rechnersystem (301) einen zentraler Leitrechner aufweist.

6. Verfahren nach Anspruch 5,
**dadurch gekennzeichnet, dass** auf dem Gelände mehrere Relaisstationen 303, 304, 305, 306, 307, 308) für das lokale Netzwerk vorhanden sind.

7. Verfahren nach einem der Ansprüche 1 bis 6,
**dadurch gekennzeichnet, dass** während des Belade- bzw. Entladevorgangs eine Eingangswiegung erfolgt vor der Durchführung des Belade- bzw. Entladevorgangs sowie eine Ausgangswiegung nach der Durchführung des Belade- bzw. Entladevorgangs, wobei von dem Benutzer über das Endgerät durch eine manuelle Eingabe die Ergebnisse der Messungen der Eingangswiegung und der Ausgangswiegung bestätigt werden können sowie die Art des Stoffes, der bei dem Belade- bzw. Entladevorgang geladen bzw. abgeladen wurde.

8. Verwendung eines Smartphone mit einer gerätespezifischen Software für die Abwicklung der endgeräteseitigen Maßnahmen des Verfahrens als Endgerät zur Durchführung des Verfahrens.

9. Verwendung nach Anspruch 8,
**dadurch gekennzeichnet, dass** über das Smartphone Daten über den Belade- bzw. Entladevorgang über eine Datenübertragung des Smartphone über das Internet und/oder per SMS übermittelt werden.
